# EUROPEAN PATENT APPLICATION

(11) **EP 4 841 948 A1**
(43) Date of publication of application: **18.11.2026**
(21) Application number: 25175781.1
(22) Date of filing: 12.05.2025
(51) Int. Cl.: H04L 41/00, H04L 9/00, B65G 1/04, H04W 84/00, G06Q 10/087, H04L 41/0806, H04L 41/08, H04L 9/40, H04W 84/12

(54) **COMMUNICATION DEVICE AND PROVISIONING SYSTEM**

(71) Applicant: AutoStore Technology AS, 5578 Nedre Vats (NO)
(72) Inventor: UNNIKANNAN NAIR, Jishnu, 5578 Nedre Vats (NO)
(74) Representative: Kilburn & Strode LLP

(57) **Abstract**

The disclosure relates to a communication device (502). The communication device is configured to initiate a provisioning process to connect to a first network (510), wherein in the provisioning process the communication device is configured to connect to a second network (504), connect to a provisioning server (508) based on the connection to the second network, and receive, from the provisioning server, provisioning information, wherein the provisioning information is configured to be used by the communication device to connect to the first network. The communication device is configured to connect to the first network using the provisioning information.

## Description

### TECHNICAL FIELD

The disclosure relates to a communication device and a provisioning system. More particularly, it relates to a communication device and a provisioning system for connecting to a network.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

The container-handling vehicles are connected to a network. A controller is also connected to the network. The controller sends control signals, to control the operation of the container-handling vehicles, via the network.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5 shows a block diagram of a main network with a controller and a plurality of remotely controlled apparatuses connected thereto;
Fig. 6 shows a block diagram of the interaction between a communication device of a remotely controlled apparatus, a main network, and a first exemplary provisioning system;
Fig. 7 shows a flow chart of the interaction a remotely controlled apparatus, a main network, and a first exemplary provisioning system;
Fig. 8 shows a block diagram of the interaction between a communication device of a remotely controlled apparatus, a main network, and a second exemplary provisioning system;
Fig. 9 shows a flow chart of a first exemplary interaction process of a remotely controlled apparatus, a main network, and a second exemplary provisioning system; and
Fig. 10 shows a flow chart of a second exemplary interaction process of a remotely controlled apparatus, a main network, and a second exemplary provisioning system.

### DETAILED DESCRIPTION

When a remotely controlled apparatus is introduced to an automated storage and retrieval system, it can be connected to a Wi-Fi network in order to be controlled by a controller.

One approach to connecting the remotely controlled apparatus to the Wi-Fi network is to have the Wi-Fi network be an open network. However, this has security drawbacks in that it exposes vulnerabilities to the Wi-Fi network. Another approach is to have each remotely controlled apparatus manually provisioned to connect to the Wi-Fi network. That is, an operator has to manually connect each remotely controlled apparatus to Wi-Fi network. Such techniques include Improv Wi-Fi and Wi-Fi Easy Connect. This addresses the security drawbacks, but is time-consuming and inefficient because devices have to be manually connected one-after-another.

In overview, the disclosure relates to a communication device. The communication device can be configured to initiate a provisioning process to connect to a first Wi-Fi network (such as a main Wi-Fi network). In the provisioning process the communication device can be configured to connect to a second Wi-Fi network, and connect to a provisioning server based on the connection to the second Wi-Fi network. The communication device can receive, from the provisioning server, provisioning information. The provisioning information can be configured to be used by the communication device to connect to the first Wi-Fi network. The communication device can connect to the first Wi-Fi network using the provisioning information.

The disclosure also relates to a provisioning system configured for communication with the communication device to provision the communication device for connection to the first Wi-Fi network. The provisioning system can comprise the second Wi-Fi network and the provisioning server. The second Wi-Fi network can be configured to receive a connection request from a communication device and facilitate a connection between the communication device and the provisioning server when the communication device is connected to the second Wi-Fi network. The provisioning server can configured to send the provisioning information to the communication device, by the second Wi-Fi network.

Through this approach, the communication device is preprogrammed to automatically initiate the provisioning process. This obviates the need for a human operator to manually connect the communication device to the main Wi-Fi network. Security in the process of connecting to the main Wi-Fi network is maintained despite human operator steps not being present in the process. Moreover, multiple communication devices (and therefore multiple remotely controlled apparatuses) can be provisioned simultaneously, leading to more efficient initiation of the automated storage and retrieval system.

### Automated storage and retrieval system overview

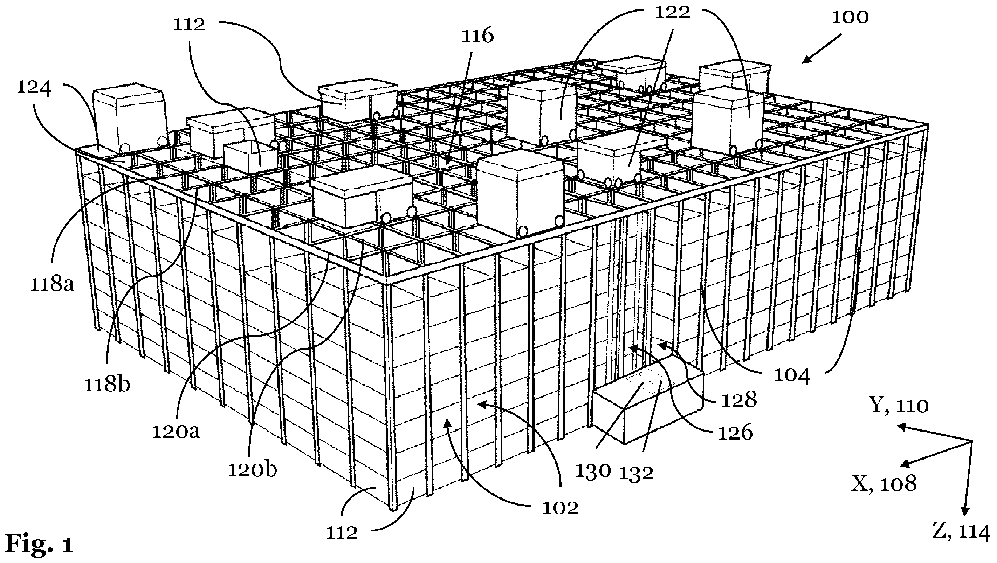

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles (also referred to herein as container-handling robotic vehicles or robots) 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off') and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

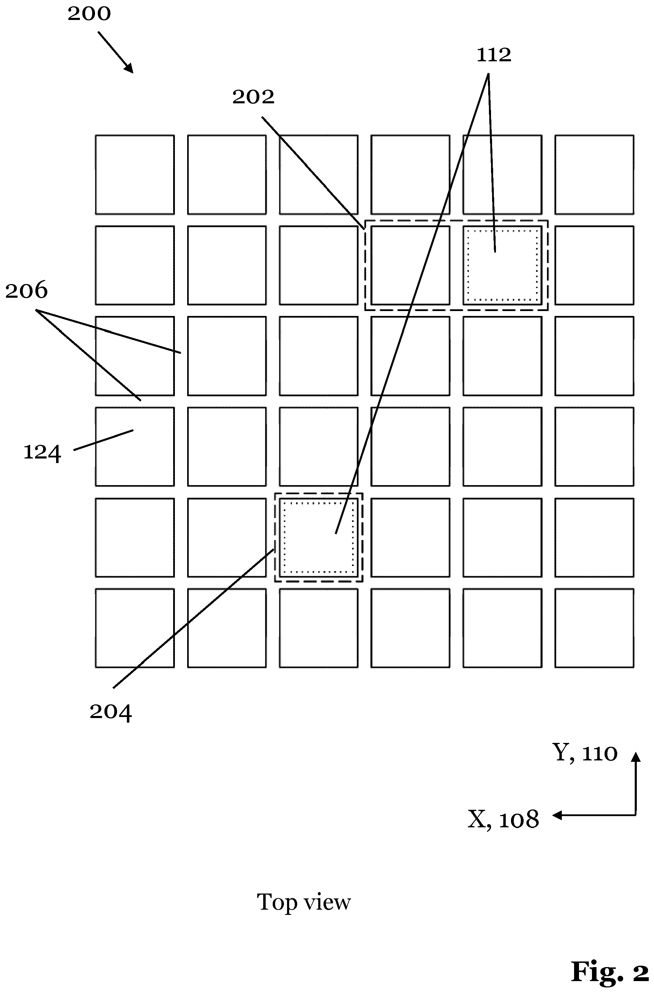

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

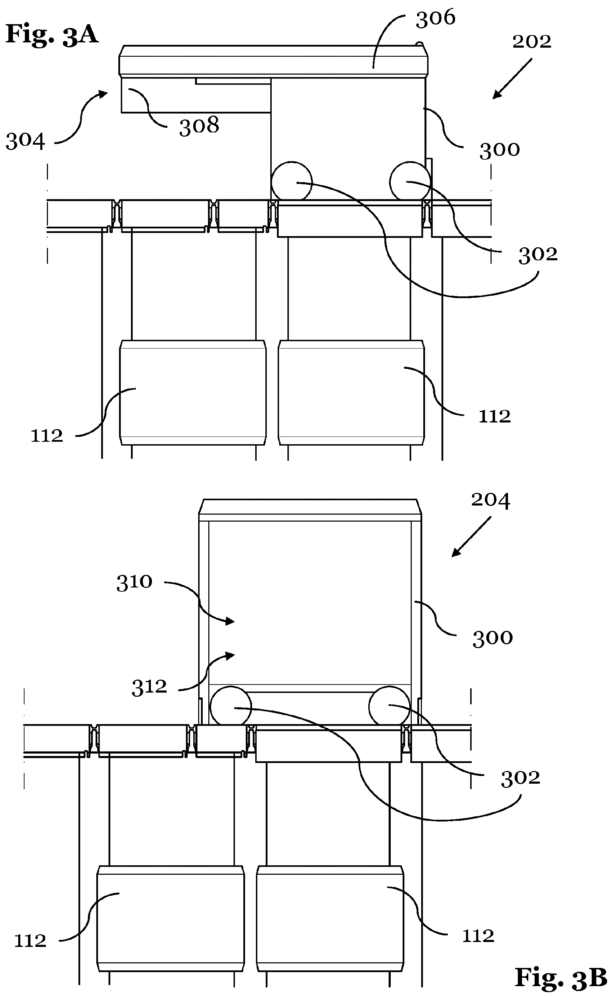

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

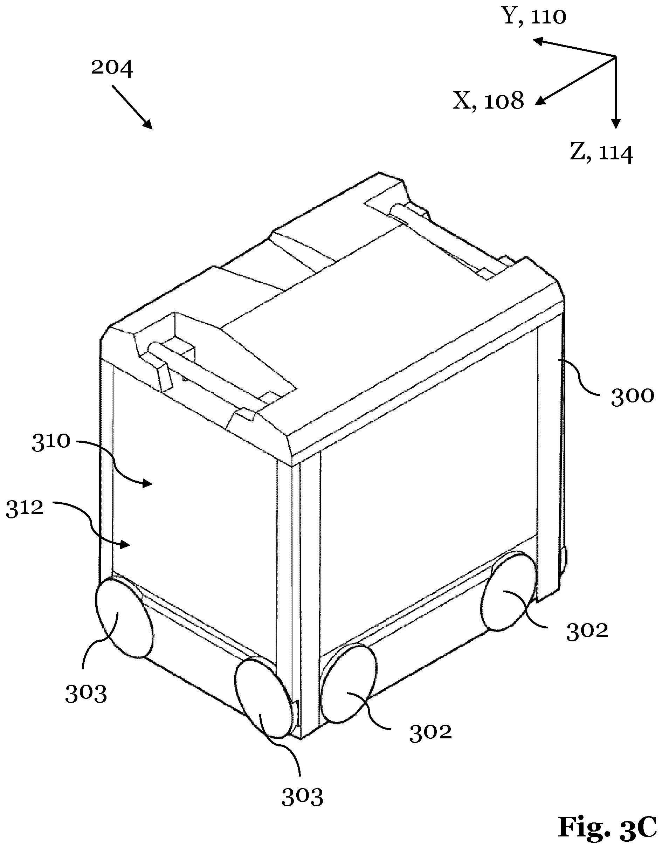

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

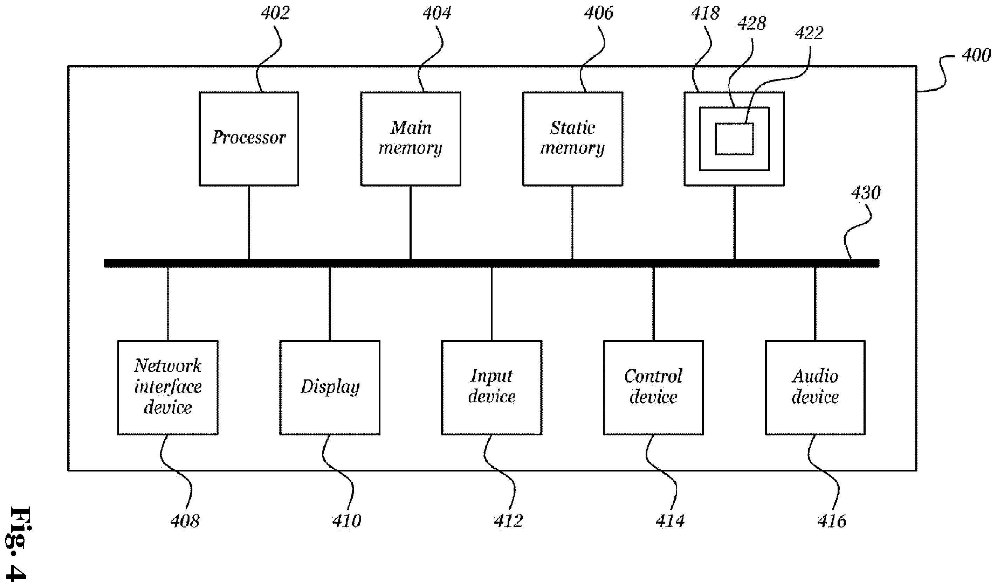

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Wi-Fi Network

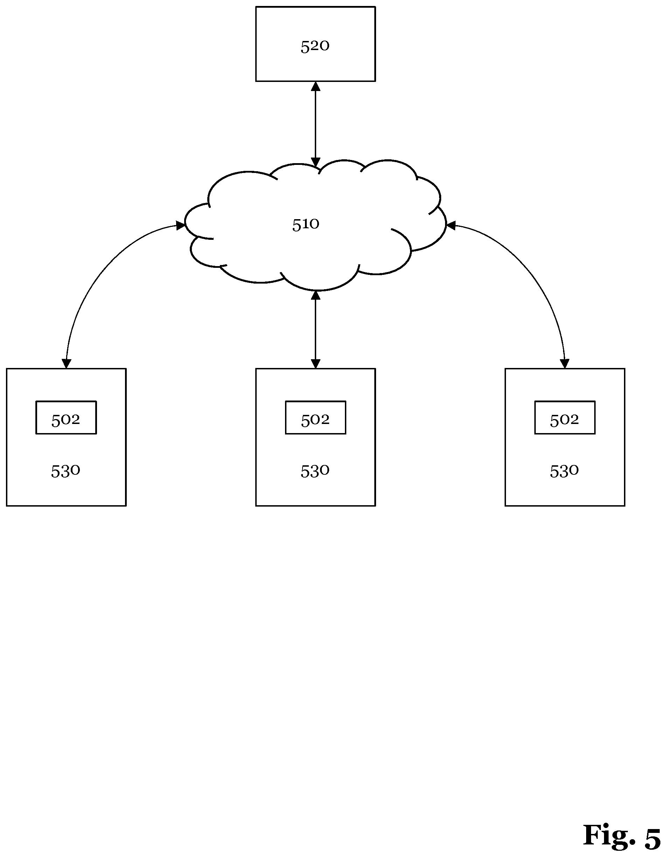

The automated storage and retrieval system has a main Wi-Fi network 510 (also referred to as a first Wi-Fi network, herein). As depicted in Fig. 5, the main Wi-Fi network 510 is used send signals between a main controller 520 of the automated storage and retrieval system and remotely controlled apparatuses 530 that operate in the automated storage and retrieval system.

The remotely controlled apparatuses 530 and the main controller 520 are connected to the main Wi-Fi network 510. The remotely controlled apparatuses 530 and the main controller 520 can communicate with one another through the main Wi-Fi network 510.

While Fig. 5 shows three remotely controlled apparatuses 530 connected to the main Wi-Fi network 510, it will be understood that this is only for illustrative purposes any suitable number (i.e., one or more) remotely controlled apparatuses 530 can be connected to the main Wi-Fi network 510. Likewise, any suitable number (i.e., one or more) controllers for the remotely controlled apparatuses 530 can be connected to the main Wi-Fi network 510.

In a specific example, the main controller 520 is a control system, such as that described with reference to Fig. 4. The remotely controlled apparatuses 530 in the automated storage and retrieval system can include one or more container-handling robotic vehicles, such as those described with reference to Figs. 3A to 3C. The remotely controlled apparatuses can alternatively/additionally include robotic arms, robotic maintenance vehicles, and any other suitable apparatuses in the automated storage and retrieval system that are controlled over a Wi-Fi network by the control system.

The remotely controlled apparatuses 530 can be considered as apparatuses that are controlled fully by the main controller 520, or at least partially controlled by the main controller 520 (i.e., they have partial autonomy and partial external control).

Each remotely controlled apparatus 530 includes a communication device 502 configured to connect to the main Wi-Fi network 510. Such a communication device 502 can comprise a Wi-Fi radio and associated controller.

The communication device 502 is connected to the on-board controller of the remotely controlled apparatus 530. The main controller 5 then sends control signals comprising instructions, over the main Wi-Fi network, to the communication device 502 at the remotely controlled apparatus 530. Each remotely controlled apparatus 530 in the automated storage and retrieval system has a unique address in the main Wi-Fi network 510 so that the main controller 520 can send signals to the specific apparatus 530, and the main controller 520 sends signals addressed to these addresses. The communication device 502 receives the control signals, and the on-board controller executes the received instructions by causing the remotely controlled apparatus 530 to perform actions indicated by the instructions.

Likewise, the on-board controller sends signals to the main controller 510, from the communication device 502, using the main Wi-Fi network 510. The on-board controller controls the communication device 502 to transmit a signal to the address of the main controller 520 in the main Wi-Fi network 510. For example, such a signal can be an indicator that an action has been performed by the remotely controlled apparatus 530, or a status indicator of one or more operational parameters of the remotely controlled apparatus 530.

For example, when the remotely controlled apparatus 530 is a container-handling robotic vehicle, the main controller 510 sends instructions to the container-handling robotic vehicle, over the main Wi-Fi network 510. The instructions can include instructions for the container-handling robotic vehicle to traverse the grid across a predetermined number of cells in the forward/backward/left/right directions and collect/retrieve a container from the destination. The communication device 502 at the container-handling robotic vehicle receives these instructions, and the on-board controller executes the instructions to cause the container-handling robotic vehicle to perform the instructed actions. When the action is complete, the on-board controller controls the communication device 502 to send a signal to the address of the main controller 520 in the main Wi-Fi network 510 indicating that the instructed action is complete.

### Connection Provisioning

When a remotely controlled apparatus 530 is introduced to the automated storage and retrieval system, it should be connected to the main Wi-Fi network 510 in order to be controlled by the main controller 520.

One approach to connecting the remotely controlled apparatus 530 to the main Wi-Fi network 510 is to have the main Wi-Fi network 510 be an open network. However, this has security drawbacks in that it exposes vulnerabilities to the main Wi-Fi network 510.

Another approach is to have each remotely controlled apparatus 530 manually provisioned to connect to the main Wi-Fi network 510. That is, an operator has to manually connect each remotely controlled apparatus 530 to main Wi-Fi network 510. Such techniques include Improv Wi-Fi and Wi-Fi Easy Connect. This addresses the security drawbacks, but is time-consuming and inefficient because devices have to be manually connected one-after-another.

The present disclosure provides provisioning systems to connect a remotely controlled apparatus 530 to the main Wi-Fi network 510 in both a secure and efficient manner. Moreover, the process allows for multiple devices to simultaneously establish connections to the main Wi-Fi network without human operator input.

The present disclosure will now be described in general terms before implementations of the disclosure are described by way of example with reference to the drawings. The words "may" and "can" are used to refer to a feature that is optional, i.e. in some implementations of the disclosure, the feature is present, and in some implementations of the disclosure, the feature is not present.

A communication device is provided.

The communication device can be configured to initiate a provisioning process to connect to a first network.

In the provisioning process the communication device can be configured to connect to a second network.

The communication device can be configured to connect to a provisioning server based on the connection to the second network.

The communication device can be configured to receive, from the provisioning server, provisioning information. The provisioning information can be configured to be used by the communication device to connect to the first network.

The communication device can be configured to connect to the first network using the provisioning information.

The communication device can configured to initiate the provisioning process in response to the communication device powering on.

The provisioning information can comprise at least one of a name of the first network, a password to access the first network, and one or more first certificates for connecting to the first network.

An address for connecting to the second network can be pre-loaded in storage at the communication device.

One or more second certificates for connecting to the second network can be pre-loaded in storage at the communication device.

The second network can be secured by an authentication server. The authentication server can be configured to verify that the one or more second certificates are signed by a same certificate authority as at the authentication server such that the communication device can be permitted to connect to the second network when the verification is successful.

To connect to the provisioning server based on the connection to the second network, the communication device can be configured to connect to the provisioning server through the second network when connected to the second network.

The communication device can be configured to connect to the provisioning server through the second network over mutual TLS using the one or more second certificates; and
The provisioning server can be configured to verify that the one or more second certificates presented by the communication device are signed by a same certificate authority as at the provisioning server.

The communication device can be configured to receive the provisioning information when the verification is successful.

To connect to the provisioning server based on the connection to the second network, the communication device can be configured to receive an address of the provisioning server from the second network, and connect to the provisioning server using the address received from the second network.

The second network can be an open network. One or more second certificates for connecting to the provisioning server can be pre-loaded in storage at the communication device. The provisioning server can be secured by an authentication server. The authentication server can be configured to verify that the one or more second certificates are signed by a same certificate authority as at the authentication server such that the communication device can be permitted to connect to the provisioning server when the verification is successful.

The communications device can be a component of a robotic device in an automated storage and retrieval system.

The automated storage and retrieval system can comprise a controller separate to the robotic device and configured to control the robotic device.

The controller can communicate with the robotic device using the first network.

The robotic device can be a robotic vehicle. The robotic vehicle can be a container-handling robotic vehicle.

An automated storage and retrieval system is provided. The automated storage and retrieval system can comprise the communication device.

A provisioning system is provided.

The provisioning system can be configured for communication with a communication device to provision the communication device for connection to a first network.

The provisioning system can comprise a second network and a provisioning server.

The second network can be configured to receive a connection request from the communication device.

The second network can be configured to facilitate a connection between the communication device and the provisioning server when the communication device is connected to the second network.

The provisioning server can be configured to send provisioning information to the communication device, by the second network. The provisioning information can be configured to be used by the communication device to connect to the first network.

The second network can be secured by an authentication server.

The authentication server can be configured to verify that one or more second certificates of the communication device are signed by a same certificate authority as at the authentication server.

The authentication server can be configured to permit the communication device to connect to the second network in response to verifying that the one or more second certificates of the communication device are signed by the same certificate authority as at the authentication server.

The provisioning server can be configured to connect to the communication device through the second network over mutual TLS.

The provisioning server can be configured to verify that the one or more second certificates presented by the communication device are signed by a same certificate authority as at the provisioning server.

The provisioning server can be configured to send the provisioning information to the communication device when the verification is successful.

Alternatively, the second network can be an open network. The provisioning server can be secured by an authentication server.

The provisioning server can be configured to receive a connection request from the communication device. The authentication server can verify that one or more second certificates of the communication device are signed by a same certificate authority as at the authentication server.

The authentication server can permit the communication device to connect to the provisioning server in response to verifying that the one or more second certificates of the communication device are signed by the same certificate authority as at the authentication server.

The provisioning server can send the provisioning information to the communication device when the verification is successful.

A method of provisioning a communication device to connect to a network is provided.

The method can comprise initiating, by the communication device, a provisioning process to connect to a first network.
The method can further comprise connecting, by the communication device, to a second network;
The method can further comprise connecting, by the communication device, to a provisioning server based on the connection to the second network;
The method can further comprise receiving, by the communication device, from the provisioning server, provisioning information, wherein the provisioning information is configured to be used by the communication device to connect to the first network.

The method can further comprise connecting, by the communication device, to the first network using the provisioning information.

Another method of provisioning a communication device to connect to a first network is provided.

The method can comprise receiving, at a second network, a connection request from the communication device.

The method can further comprise facilitating a connection between the communication device and a provisioning server when the communication device is connected to the second network.

The method can further comprise sending, from the provisioning server, provisioning information to the communication device, by the second network, wherein the provisioning information is configured to be used by the communication device to connect to the first network.

The methods can also comprise any of the other aforementioned features, as appropriate.

A first computer-readable medium is provided. The first computer-readable medium can store instructions thereon that when executed by one or more processors of a communication device can cause the communication device to initiate a provisioning process to connect to a first network.

The instructions can also cause the communication device to connect to a second network.

The instructions can also cause the communication device to connect to a provisioning server based on the connection to the second network.

The instructions can also cause the communication device to receive, from the provisioning server, provisioning information, wherein the provisioning information is configured to be used by the communication device to connect to the first network.

The instructions can also cause the communication device to connect to the first network using the provisioning information.

A second computer-readable medium is provided. The second computer-readable medium can store instructions thereon that when executed by one or more processors of a second network can cause the second network to receive a connection request from the communication device.

The instructions can also cause the second network to facilitate a connection between the communication device and a provisioning server when the communication device is connected to the second network.

A third computer-readable medium is provided. The third computer-readable medium can store instructions thereon that when executed by one or more processors of a provisioning server can cause the provisioning server to send provisioning information to a communication device, by a second network, wherein the provisioning information is configured to be used by the communication device to connect to a first network.

The aforementioned computer-readable media can be non-transitory computer-readable media.

The instructions stored on the computer-readable media can also comprise any of the other aforementioned features, as appropriate.

In any of the preceding features, the first network can be a first Wi-Fi network and the second network can be a second Wi-Fi network different to the first Wi-Fi network.

Each possible combination of any of the above-described features forms part of the present disclosure. A plurality of instances of any feature may also be present.

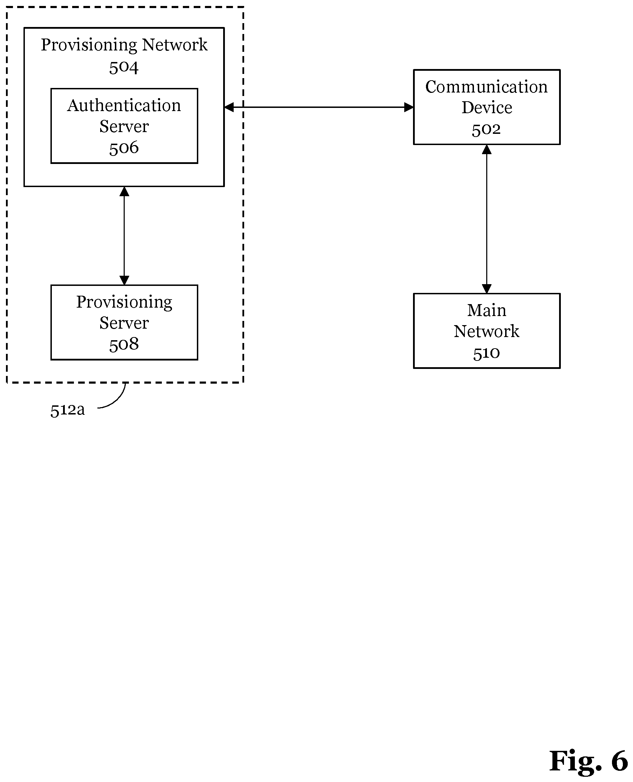

By way of example, exemplary implementations of the provisioning systems of the disclosure will now be described with reference to Figs. 6 to 10. Each possible combination of any features described below with any features described above also forms part of the disclosure.

Fig. 6 shows a block diagram of the interaction between a communication device 502 of a remotely controlled apparatus 530, the main Wi-Fi network 510, and a first exemplary provisioning system 512a that provisions a connection between the communication device 502 and the main Wi-Fi network 510.

The first exemplary provisioning system 512a comprises a provisioning Wi-Fi network 504 (also referred to as a second Wi-Fi network, herein) and a provisioning server 508. The provisioning server 508 is connected to the provisioning Wi-Fi network 504. The provisioning Wi-Fi network 504 includes an authentication server 506 that secures the provisioning Wi-Fi network 504.

The communication device 502 connects to the provisioning Wi-Fi network 504. When the communication device 502 connects to the provisioning Wi-Fi network 504, the communication device 502 is authenticated by the authentication server 506 at the provisioning Wi-Fi network 504. When the communication device 502 has been authenticated, the communication device 502 is able to connect to the provisioning server 508 through the provisioning Wi-Fi network 504. The provisioning server 508 then sends provisioning information to the communication device 502. The provisioning information provides the communication device 502 with information to connect to the main Wi-Fi network 510. The communication device 502 then uses the provisioning information to connect to the main Wi-Fi network 510.

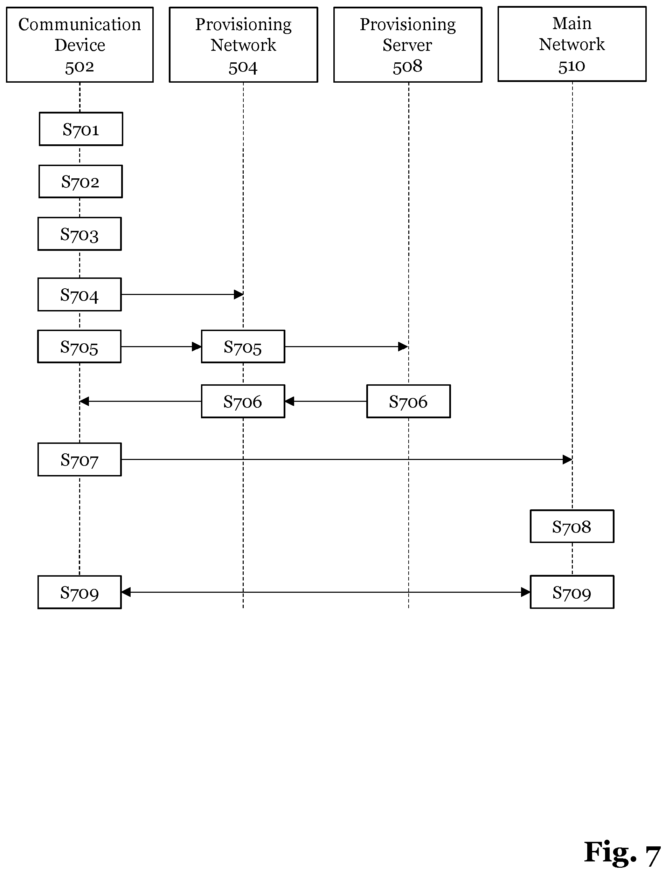

The more detailed interaction between the communication device 502, the main Wi-Fi network 510, and the first exemplary provisioning system 512a of Fig. 6, to establish the connection between the communication device 502 and the main Wi-Fi network 510 is described with reference to Fig. 7.

At step S701, the communication device 502 powers on. For example, this takes place when the remotely controlled apparatus comprising the communication device 502 is powered on.

At step S702 the communication device 502 determines whether it has previously been provisioned to connect to the main Wi-Fi network 510.

For example, if the communication device 502 is in a remotely controlled apparatus that is newly introduced to the automated storage and retrieval system, it may not yet have been provisioned to connect to the main Wi-Fi network 510. On the other hand, if the communication device is in a remotely controlled apparatus that has previously been in operation in the automated storage and retrieval system, for example it has been powered-off overnight and powered-on again to resume operation, it may be already provisioned to connect to the main Wi-Fi network 510.

When the communication device 502 determines that it has not been provisioned to connect to the main Wi-Fi network 510, the process proceeds to step S703.

When the communication device 502 determines that it has already been provisioned to connect to the main Wi-Fi network 510, the communication device 502 proceeds to connect to the main Wi-Fi network 510 so that the remotely controlled apparatus can interact with the main controller 520.

At step S703, the communication device 502 initiates the provisioning process to connect to the main Wi-Fi network 510.

That is, the communication device 502 is preprogrammed to automatically initiate the provisioning process. This obviates the need for a human operator to manually connect the communication device to the main Wi-Fi network 510. The steps of the process of Fig. 7, performed by the communication device 502, are preprogrammed for automatic execution by the communication device 502. Likewise, the steps of the process of Fig. 7 performed by the provisioning system 512a are preprogrammed for automatic execution by the provisioning system 512a.

At step S704, the communication device 502 attempts to connect to the provisioning Wi-Fi network 504.

The connection details for connecting to the provisioning Wi-Fi network 504 are pre-loaded in storage at the communication device 502. Such connection details can include the network name of the provisioning Wi-Fi network 504 for the communication device 502 to connect to. For example, pre-loading the connection details for the provisioning Wi-Fi network 504 can be done during a fabrication or commissioning stage of the remotely controlled apparatus that comprises the communication device 502. When the provisioning process is initiated, the communication device 502 accesses the storage, retrieves the connection details, and connects to the provisioning Wi-Fi network 504 using these details.

The provisioning Wi-Fi network 504 is secured by the authentication server 506. Only authenticated communication devices 502 are capable of connecting to the provisioning Wi-Fi network 504. For example, the authentication server 506 is a WPA3 Enterprise Authentication Server integrated into / within the provisioning Wi-Fi network 506.

One or more provisioning authentication certificates are pre-loaded in storage at the communication device 502. For example, pre-loading the provisioning authentication certificates can be done during a fabrication or commissioning stage of the remotely controlled apparatus that comprises the communication device 502. No password therefore needs to be manually entered to connect to provisioning Wi-Fi network 504.

The communication device 502 presents the provisioning authentication certificates to the authentication server 506 when attempting to connect to the provisioning Wi-Fi network 504.

The authentication server 506 verifies that provisioning authentication certificates of the communication device 502 are signed by the same certificate authority as at the authentication server 506.

When the authentication server 506 determines that the provisioning authentication certificates are signed by the same certificate authority as at the authentication server 506, the communication device 502 is permitted to connect to the provisioning Wi-Fi network 504. The connection between the communication device 502 and the provisioning Wi-Fi network 504 is established and the process proceeds to step S705.

When the communication device 502 is unable to present the provisioning authentication certificates, or when the authentication server 506 determines that the presented provisioning authentication certificates are not signed by the same certificate authority as at the authentication server 506, the communication device 502 is not permitted to connect to the provisioning Wi-Fi network 504, and the provisioning process is terminated.

In this way, security in the process of connecting to the main Wi-Fi network 510 is maintained despite human operator steps not being present in the process.

At step S705, the communication device 502 connects to the provisioning server 508 through the provisioning Wi-Fi network 504 over mutual TLS using the provisioning authentication certificates.

The address of the provisioning server 508 is pre-loaded in storage at the communication device 502. For example, pre-loading the address of the provisioning server 508 can be done during a fabrication or commissioning stage of the remotely controlled apparatus that comprises the communication device 502.

In an alternative, rather than the address of the provisioning server 508 being pre-loaded at the communication device 502, the provisioning Wi-Fi network 504 can provide the address of the provisioning server 508 to the communication device 502 when the communication device 502 has connected to the provisioning Wi-Fi network 504 and is authenticated.

The communication device 502 connects to the provisioning server 508 using the address of the provisioning server 508.

The provisioning Wi-Fi network 504 facilitates communication between the communication device 502 and the provisioning server 508.

The provisioning server 508 stores provisioning information which is used by the communication device 502 to connect to the main Wi-Fi network 510.

To access the provisioning server 508, the communication device 502 presents the one or more provisioning authentication certificates to the provisioning server 508.

The provisioning server 508 is configured to verify that the presented provisioning authentication certificates are signed by the same certificate authority as at the provisioning server 508.

That is, the same provisioning authentication certificates are used to access the provisioning server 508 as those used to connect to the provisioning Wi-Fi network 504. In an alternative, different certificates can be used.

When the verification is successful, access to the provisioning server 508 is granted for the communication device 502, and the process proceeds to step S706.

When the verification is not successful, the provisioning process is terminated.

At step 706, the provisioning server 508 sends the provisioning information for connecting to the main Wi-Fi network 510 to the communication device 502. The provisioning server 508 sends this provisioning information to the communication device through the provisioning Wi-Fi network 504.

The provisioning information comprises at least one of: a name of the main Wi-Fi network 510, a password to access the main Wi-Fi network 510, and/or one or more main network certificates for connecting to the main Wi-Fi network 510.

The communication device 502 receives the provisioning information sent by the provisioning server 508, and the process proceeds to step S707.

At step S707, the communication device 502 uses the received provisioning information to attempt to connect to the main Wi-Fi network 510. For example, the communication device determines to connect to the network indicated by the received name of the main Wi-Fi network 510 in the provisioning information. The process then proceeds to step S708.

At step S708, the main Wi-Fi network 510 authenticates the communication device 502 using the received password and/or by verifying that the main network certificates presented by the communication device 502 are correct.

When the communication device 502 presents the correct password and correct main network certificates, the main Wi-Fi network 510 permits connection of the communication device 502 thereto. When the main Wi-Fi network 510 has authenticated the communication device, the process proceeds to step S709.

When the main Wi-Fi network 510 cannot authenticate the communication device 502, the connection for the communication device 502 to the main Wi-Fi network 510 is refused. For example, the main Wi-Fi network 510 does not authenticate the communication device 502 when the communication device 502 is unable to present the correct main network certificates, or when the communication device 502 does not have the correct password for the main Wi-Fi network 510. In this way, devices that have not been provisioned via the provisioning system 512a cannot connect to the main Wi-Fi network 510.

At step S709, a communication channel is established between the main Wi-Fi network 510 and the communication device 502.

The main controller 520 is also connected to the main Wi-Fi network 510. Therefore, the main controller 520 and the communication device 502 can exchange communications through main Wi-Fi network 510.

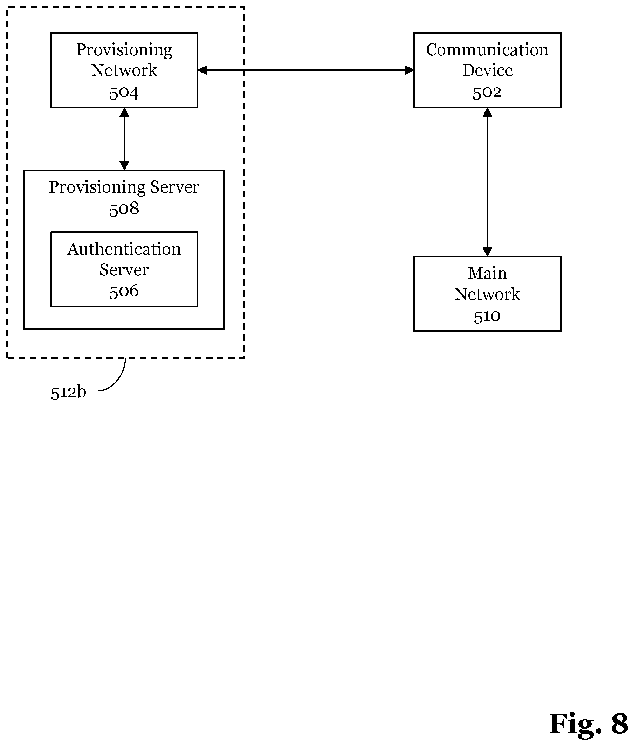

Fig. 8 shows a block diagram of the interaction between the communication device 502 of a remotely controlled apparatus, the main Wi-Fi network 510, and a second exemplary provisioning system 512b that provisions a connection between the communication device 502 and the main Wi-Fi network 510.

The second exemplary provisioning system 512b comprises a provisioning Wi-Fi network 504 (also referred to as a second Wi-Fi network, herein) and a provisioning server 508. The provisioning server 508 is connected to the provisioning Wi-Fi network 504. An authentication server 506 is arranged at the provisioning server 508.

The communication device 502 connects to the provisioning Wi-Fi network 504 and then connects to the provisioning server 508 through the provisioning Wi-Fi network 504. The communication device 502 is authenticated by the authentication server 506 at the provisioning server 508. The provisioning server 508 then sends provisioning information to the communication device 502. The provisioning information provides the communication device 502 with information to connect to the main Wi-Fi network 510. The communication device 502 then uses the provisioning information to connect to the main Wi-Fi network 510.

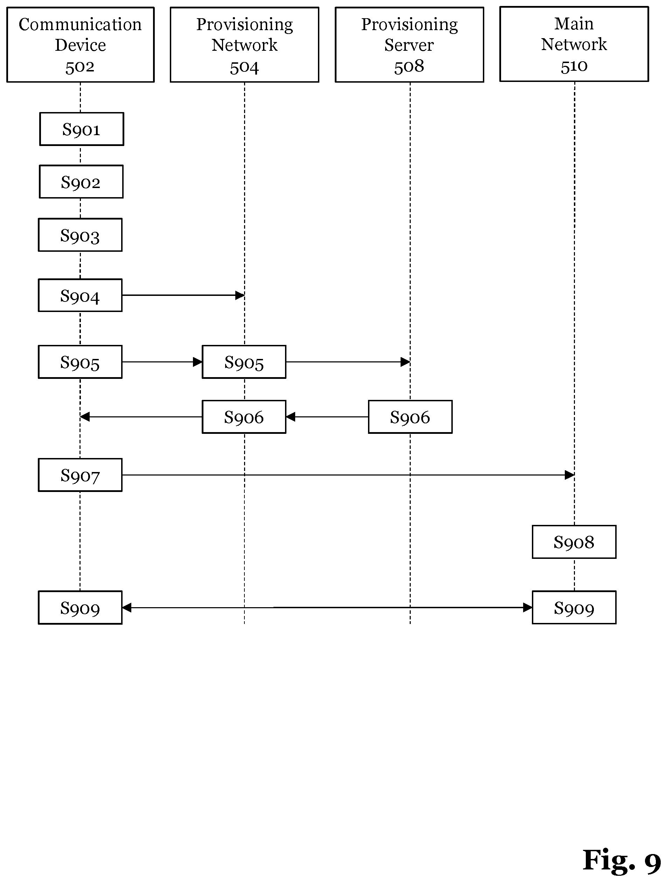

A first example of the more detailed interaction between the communication device 502, the main Wi-Fi network 510, and the second exemplary provisioning system 512b of Fig. 8, to establish the connection between the communication device 502 and the main Wi-Fi network 510, is described with reference to Fig. 9.

At step S901, the communication device 502 powers on. For example, this takes place when the remotely controlled apparatus comprising the communication device 502 is powered on.

At step S902 the communication device 502 determines whether it has previously been provisioned to connect to the main Wi-Fi network 510.

For example, if the communication device 502 is in a remotely controlled apparatus that is newly introduced to the automated storage and retrieval system, it may not yet have been provisioned to connect to the main Wi-Fi network 510. If the communication device 502 is in a remotely controlled apparatus that has previously been in operation in the automated storage and retrieval system, for example it has been powered-off overnight and powered-on again to resume operation, it may be already provisioned to connect to the main Wi-Fi network 510.

When the communication device 502 determines that it has not been provisioned to connect to the main Wi-Fi network 510, the process proceeds to step S903.

When the communication device 502 determines that it has already been provisioned to connect to the main Wi-Fi network 510, the communication device 502 proceeds to connect to the main Wi-Fi network 510 so that the remotely controlled apparatus can interact with the main controller 520.

At step S903, the communication device 502 initiates the provisioning process to connect to the main Wi-Fi network 510.

That is, the communication device 502 is preprogrammed to automatically initiate the provisioning process. This obviates the need for a human operator to manually connect the communication device to the main Wi-Fi network 510. The steps of the process of Fig. 9, performed by the communication device 502, are preprogrammed for automatic execution by the communication device 502. Likewise, the steps of the process of Fig. 9 performed by the provisioning system 512b are preprogrammed for automatic execution by the provisioning system 512b.

At step S904, the communication device 502 connects to the provisioning Wi-Fi network 504.

The connection details for connecting to the provisioning Wi-Fi network 504 are pre-loaded in storage at the communication device 502. Such connection details can include the network name of the provisioning Wi-Fi network 504 for the communication device 502 to connect to. For example, pre-loading the connection details for the provisioning Wi-Fi network 504 can be done during a fabrication or commissioning stage of the remotely controlled apparatus that comprises the communication device 502. When the provisioning process is initiated, the communication device 502 accesses the storage, retrieves the connection details, and connects to the provisioning Wi-Fi network 504 using these details.

The provisioning Wi-Fi network 504 is an open network, to which the communication device 502 directly connects without requiring authentication steps. In an alternative, the provisioning Wi-Fi network 504 is a password protected network, and the password is pre-loaded in storage at the communication device 502 (e.g., with the connection details for provisioning Wi-Fi network 504). The communication device 502 then presents the password to connect to the provisioning Wi-Fi network 504.

At step S905, the communication device 502 connects to the provisioning server 508 through the provisioning Wi-Fi network 504.

The address of the provisioning server 504 is pre-loaded in storage at the communication device 502. For example, pre-loading the address of the provisioning server 508 can be done during a fabrication or commissioning stage of the remotely controlled apparatus that comprises the communication device 502.

The communication device 502 connects to the provisioning server 508 using the address of the provisioning server 508.

The provisioning Wi-Fi network 504 facilitates communication between the communication device 502 and the provisioning server 508.

The provisioning server 508 stores provisioning information which is used by the communication device 502 to connect to the main Wi-Fi network 510.

The provisioning server 508 is secured by the authentication server 506 that is arranged at (i.e., connected to or associated with) the provisioning server 508. For example, the authentication server 506 is a WPA3 Enterprise Authentication Server.

One or more provisioning authentication certificates are pre-loaded in storage at the communication device 502. For example, pre-loading the provisioning authentication certificates can be done during a fabrication or commissioning stage of the remotely controlled apparatus that comprises the communication device 502. No password therefore needs to be manually entered to connect to provisioning server 508.

The communication device 502 presents the provisioning authentication certificates to the authentication server 506 at the provisioning server 508 when attempting to connect to the provisioning server 508.

The authentication server 506 verifies that the provisioning authentication certificates of the communication device 502 are signed by the same certificate authority as at the authentication server 506.

When the authentication server 506 determines that the presented provisioning authentication certificates are signed by the same certificate authority as at the authentication server 506, the authentication server 506 permits the communication device to connect to the provisioning server 508. The process then proceeds to step S906.

When the communication device 502 is unable to present the provisioning authentication certificates, or when the authentication server 506 determines that the presented provisioning authentication certificates are not signed by the same certificate authority as at the authentication server 506, the communication device 502 is not permitted to connect to the provisioning server 508, and the provisioning process is terminated.

In this way, security in the process of connecting to the main Wi-Fi network 510 is maintained despite human operator steps not being present in the process.

At step 906, the provisioning server 508 sends the provisioning information for connecting to the main Wi-Fi 510 to the communication device 502. The provisioning server 504 sends this provisioning information to the communication device 502 through the provisioning Wi-Fi network 504.

The provisioning information comprises at least one of: a name of the main Wi-Fi network 510, a password to access the main Wi-Fi network 510, and/or one or more main network certificates for connecting to the main Wi-Fi network 510.

The communication device 502 receives the provisioning information sent by the provisioning server 508, and the process proceeds to step S907.

At step S907, the communication device 502 uses the received provisioning information to attempt to connect to the main Wi-Fi network 510. For example, the communication device determines to connect to the network indicated by the received name of the main Wi-Fi network 510 in the provisioning information. The process then proceeds to step S908.

At step S908, the main Wi-Fi network 510 authenticates the communication device 502 using the received password and/or by verifying that the main network certificates presented by the communication device are correct.

When the communication device 502 presents the correct password and correct main network certificates, the main Wi-Fi network 510 permits connection of the communication device 502 thereto. When the main Wi-Fi network 510 has authenticated the communication device 502, the process proceeds to step S909.

When the main Wi-Fi network 510 cannot authenticate the communication device 502, the connection for the communication device 502 to the main Wi-Fi network 510 is refused. For example, the main Wi-Fi network 510 does not authenticate the communication device 502 when the communication device 502 is unable to present the correct main network certificates, or when the communication device 502 does not have the correct password for the main Wi-Fi network 510. In this way, devices that have not been provisioned via the provisioning system 512b cannot connect to the main Wi-Fi network 510.

At step S909, a communication channel is established between the main Wi-Fi network 510 and the communication device 502.

The main controller 520 is also connected to the main Wi-Fi network 510. Therefore, the main controller 520 and the communication device 502 can exchange communications through main Wi-Fi network 510.

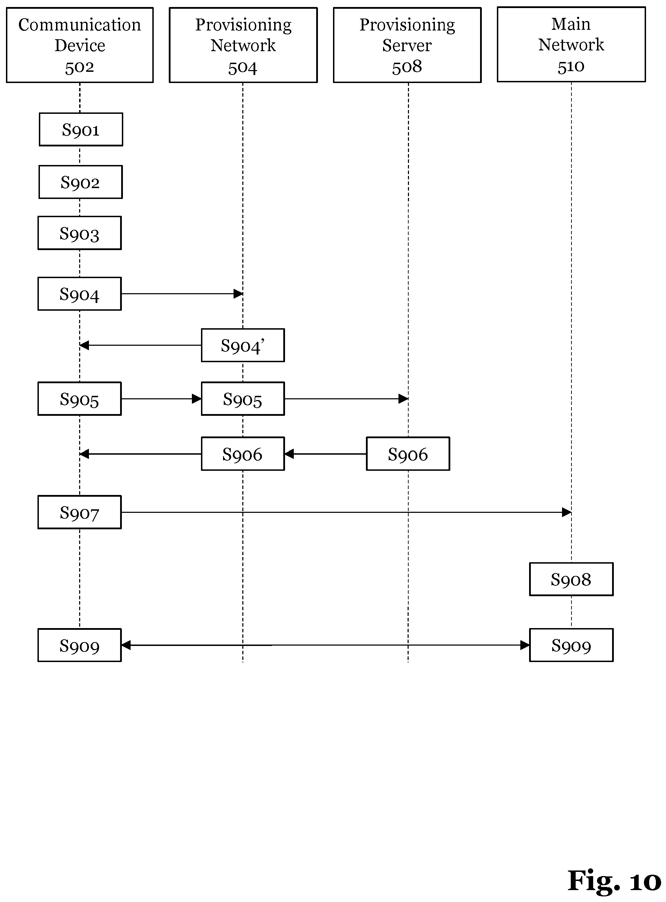

A second example of the interaction between the communication device 502, the main Wi-Fi network 510, and the second exemplary provisioning system 512b of Fig. 8, to establish the connection between the communication device 502 and the main Wi-Fi network 510, is described with reference to Fig. 10.

The process of Fig. 10 is substantially the same as the process of Fig. 9, and so the detail is not repeated for brevity, and the same reference numerals are used to refer to identical steps (unless noted otherwise, as follows).

Step S901 of Fig. 10 corresponds directly to step S901 of Fig. 9.

Step S902 of Fig. 10 corresponds directly to step S902 of Fig. 9.

Step S903 of Fig. 10 corresponds directly to step S903 of Fig. 9.

Step S904 of Fig. 10 corresponds directly to step S904 of Fig. 9.

In the process of Fig. 10, the address of the provisioning server 508 is not pre-loaded in storage at the communication device 502 (unlike the process of Fig. 9).

Instead, at step S904' of the process of Fig. 10, the provisioning Wi-Fi network 504 provides the communication device 502 with the address of the provisioning server 508. In this way, the provisioning server address 508 can change without needing to change a pre-loaded address in storage at the communication device 502 for remotely controlled apparatuses that are to be provisioned.

At step S905 of the process of Fig. 10, the communication device 502 connects to the provisioning server 508 through the provisioning Wi-Fi network 504 using the address provided at step S904', instead of using a pre-loaded address as described with reference to Fig. 9.

Step S906 of Fig. 10 corresponds directly to step S906 of Fig. 9.

Step S907 of Fig. 10 corresponds directly to step S907 of Fig. 9.

Step S908 of Fig. 10 corresponds directly to step S908 of Fig. 9.

Step S909 of Fig. 10 corresponds directly to step S909 of Fig. 9.

The systems and processes described with reference to Figures 6 to 10 provide improved security by virtue of having to connect to the secured provisioning server 508 to gain access to the main Wi-Fi network 510. Only communication devices 502 that have the one or more pre-loaded provisioning authentication certificates can access the provisioning server 508 to retrieve the one or more main network certificates for accessing the main Wi-Fi network 510.

Moreover, the provisions (network details, security details, and like) at the main Wi-Fi network 510 can be updated or changed without requiring any updates to the communication devices 502. The pre-loaded provisioning authentication certificates can continue to be used to access the provisioning server 508 and retrieve updated main network certificates and/or the other updated provisioning information. This adds flexibility in the networking and security compared to pre-loading the provisioning information to connect to the main Wi-Fi network 510 at the communication device 502 because only the provisioning server 508 need be updated, rather than each device that will connect to the main Wi-Fi network 510.

While the foregoing description discusses the provisioning process in terms of an automated storage and retrieval system, the provisioning process can be implemented in other scenarios. For example, in a factory with remotely controlled robots, or for other devices in a public or private space. Indeed, the provisioning process could be implemented in any circumstances that can accommodate a provisioning Wi-Fi network to which a communication device can connect for securely retrieving provisioning information from a provisioning server to connect to a main Wi-Fi network.

While the foregoing description discusses the provisioning Wi-Fi network and main Wi-Fi network as Wi-Fi networks, it will be understood that in alternatives different wireless networking protocols can be used, with the same principles applied. Therefore, the teaching herein need not be limited to only Wi-Fi networks, and any suitable types of wireless networks may be used instead.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A communication device configured to:
initiate a provisioning process to connect to a first network, wherein in the provisioning process the communication device is configured to:
connect to a second network;
connect to a provisioning server based on the connection to the second network;
receive, from the provisioning server, provisioning information, wherein the provisioning information is configured to be used by the communication device to connect to the first network; and
connect to the first network using the provisioning information.

2. The communication device of claim 1, wherein the communication device is configured to initiate the provisioning process in response to the communication device powering on.

3. The communication device of any preceding claim, wherein the provisioning information comprises at least one of a name of the first network, a password to access the first network, and one or more first certificates for connecting to the first network.

4. The communication device of any preceding claim, wherein an address for connecting to the second network is pre-loaded in storage at the communication device.

5. The communication device of any preceding claim, wherein one or more second certificates for connecting to the second network are pre-loaded in storage at the communication device; and
the second network is secured by an authentication server configured to verify that the one or more second certificates are signed by a same certificate authority as at the authentication server such that the communication device is permitted to connect to the second network when the verification is successful; and
to connect to the provisioning server based on the connection to the second network, the communication device is configured to connect to the provisioning server through the second network when connected to the second network.

6. The communication device of claim 5, wherein the communication device is configured to connect to the provisioning server through the second network over mutual TLS using the one or more second certificates; and
the provisioning server is configured to verify that the one or more second certificates presented by the communication device are signed by a same certificate authority as at the provisioning server, and the communication device is configured to receive the provisioning information when the verification is successful.

7. The communication device of any one of claims 1 to 4, wherein the second network is an open network, and one or more second certificates for connecting to the provisioning server are pre-loaded in storage at the communication device; and
the provisioning server is secured by an authentication server configured to verify that the one or more second certificates are signed by a same certificate authority as at the authentication server such that the communication device is permitted to connect to the provisioning server when the verification is successful.

8. The communication device of any preceding claim, wherein the communications device is a component of a robotic device in an automated storage and retrieval system; and
wherein the automated storage and retrieval system comprises a controller separate to the robotic device and configured to control the robotic device, and wherein the controller communicates with the robotic device using the first network.

9. An automated storage and retrieval system comprising the communication device of claim 8.

10. A provisioning system configured for communication with a communication device to provision the communication device for connection to a first network, the provisioning system comprising a second network and a provisioning server;
wherein the second network is configured to:
receive a connection request from the communication device;
facilitate a connection between the communication device and the provisioning server when the communication device is connected to the second network;
wherein the provisioning server is configured to:
send provisioning information to the communication device, by the second network, wherein the provisioning information is configured to be used by the communication device to connect to the first network.

11. The provisioning system of claim 10, wherein:
the second network is secured by an authentication server configured to:
verify that one or more second certificates of the communication device are signed by a same certificate authority as at the authentication server; and
permit the communication device to connect to the second network in response to verifying that the one or more second certificates of the communication device are signed by the same certificate authority as at the authentication server;
the provisioning server is configured to:
connect to the communication device through the second network over mutual TLS;
verify that the one or more second certificates presented by the communication device are signed by a same certificate authority as at the provisioning server; and
send the provisioning information to the communication device when the verification is successful.

12. The provisioning system of claim 10, wherein:
the second network is an open network; and
the provisioning server is secured by an authentication server, and is configured to:
receive a connection request from the communication device;
verify, by the authentication server, that one or more second certificates of the communication device are signed by a same certificate authority as at the authentication server;
permit the communication device to connect to the provisioning server in response to verifying that the one or more second certificates of the communication device are signed by the same certificate authority as at the authentication server;
send the provisioning information to the communication device when the verification is successful.

13. The communication device of any one of claims 1 to 8, or the automated storage and retrieval system of claim 9, or the provisioning system of any one of claims 10 to 12, wherein the first network is a first Wi-Fi network and the second network is a second Wi-Fi network different to the first Wi-Fi network.

14. A method of provisioning a communication device to connect to a network, the method comprising:
initiating, by the communication device, a provisioning process to connect to a first network;
connecting, by the communication device, to a second network;
connecting, by the communication device, to a provisioning server based on the connection to the second network;
receiving, by the communication device, from the provisioning server, provisioning information, wherein the provisioning information is configured to be used by the communication device to connect to the first network; and
connecting, by the communication device, to the first network using the provisioning information.

15. A computer-readable medium storing instructions thereon that when executed by one or more processors of a communication device cause the communication device to:
initiate a provisioning process to connect to a first network;
connect to a second network;
connect to a provisioning server based on the connection to the second network;
receive, from the provisioning server, provisioning information, wherein the provisioning information is configured to be used by the communication device to connect to the first network; and
connect to the first network using the provisioning information.
